# EUROPEAN PATENT SPECIFICATION

(11) **EP 1 869 674 B1**
(45) Date of publication and mention of the grant of the patent: **14.10.2009**
(21) Application number: 06725561.2
(22) Date of filing: 05.04.2006
(51) Int. Cl.: G11B 7/00

(54) **BASIC YELLOW DYES AS DYE COMPONENT FOR OPTICAL DATA RECORDING MEDIA**
BASISCHE GELBFARBSTOFFE ALS FARBSTOFFKOMPONENTE FÜR OPTISCHE AUFZEICHNUNGSMEDIEN
COLORANTS JAUNES BASIQUES COMME COMPOSANT DE COULEUR POUR UN SUPPORT D'ENREGISTREMENT DE DONNEES OPTIQUES

(30) Priority: 07.04.2005 EP 05007639
(43) Date of publication of application: 26.12.2007
(73) Proprietor: Clariant Finance (BVI) Limited, Road Town, Tortola (VG)
(72) Inventor: STEFFANUT, Pascal, F-68128 Village-Neuf (FR); GRACIET, Jean-Christophe, F-68128 Village-Neuf (FR); LÜCKE, Lars, 65719Hofheim am Taunus (DE); WINTER, Martin, Alexander, 79400 Kandern (DE)
(74) Representative: Mikulecky, Klaus
(86) International application number: PCT/EP2006/061328
(87) International publication number: WO 2006/106110

(56) References cited:
- EP-A- 0 488 231
- EP-A- 0 649 133
- WO-A-20/04088649

## Description

The present invention relates to the use of Basic Yellow dyes as dye component for optical data recording media. In a preferred aspect the present invention relates to Basic Yellow dyes together with a metalazo complex dye as dye components for optical data recording media. In a more preferred aspect, the invention relates to a write once read many (WORM) type optical data recording medium capable of recording and reproducing information with radiation of blue laser of preferably 405 nm, which employs a Basic Yellow dye together with a metalazo complex dye and a further recording dye in the optical layer.

Optical data recording media (optical discs) capable of recording information only once with a laser beam are conventionally known. Such optical discs are also referred to as write-once CDs (CD-Rs) and in a typical structure thereof, a recording layer (optical layer) comprising an organic compound such as an organic dye, a light reflective layer comprising a metal such as gold, and a protective layer made of a resin, are laminated successively, in this order, on a transparent disc-shaped substrate. Information is recorded to a CD-R by irradiating a near-infrared laser beam (usually a laser beam with a wavelength near 780 nm) thereon, in which the irradiated area of the recording layer absorbs the beam. The temperature of the irradiated area increases, causing the optical characteristics of the area to undergo physical or chemical changes (e.g. the formation of pits) and the information is thus recorded.

With regards to reading (reproduction) of information, this is also conducted by irradiating a laser beam with a wavelength identical to that of the recording laser beam. Information reproduction from the CD-R is conducted by detecting the difference of the reflectivity in the recording area between the areas where the optical characteristics have been changed (recorded area) and not changed (unrecorded area).

In recent years, there has been a demand for optical information recording media possessing higher recording density. To meet this demand for greater recording capacity, an optical disc referred to as a write-once digital versatile disc (DVD-R) has been proposed (for example, see *Nikkei New Media* special volume "DVD", published in 1995). The DVD-R is configured by appending two discs, each usually formed by laminating a recording layer containing an organic dye, a light reflective layer and a protective layer, in this order, on a transparent disc-shaped substrate in which guide grooves (pre-grooves) for laser beam tracking are formed. The pre-grooves occupy a narrow area of the DVD-R, specifically one-half or less of the DVD-R (0.74-0.8 µm) and the recording layers of the disc are formed towards the inner portion of the disc. The DVD-R can also be configured so that a disc-shaped protective substrate is included with the recording layer formed towards the inner portion of the disc. Information is recorded to and reproduced from the DVD-R by irradiating a visible laser beam thereon (usually a laser beam with a wavelength of about 630 nm to 680 nm), and thus, recording at a density higher than that of a CD-R is possible.

However, considering factors such as the recent spread of networks (e.g. Internet) and the emergence of high definition television (HDTV) broadcasting, cheap and convenient recording media, capable of recording image information at even larger capacity, are required. While DVD-Rs sufficiently serve as high-capacity recording media at present, demand for larger capacity and higher density has increased.

Blu-ray^{®} discs (Blu-ray^{®} disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) or HD-DVD discs (a standard developed by Toshiba and NEC) are going to be the next milestone in optical recording technology. Its new specification increases the data storage up to 27 Gigabytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

Here also organic dyes have attracted considerable attentions and some solutions have been already proposed in the field of short wavelength diode-laser optical storage. Examples of such media include JP-A Nos. 4-74690, 7-304256, 7-304257, 8-127174, 11-53758, 11-334204, 11-334205, 11-334206, 11-334207, 2000-43423, 2000-108513, 2000-113504, 2000-149320, 2000-158818, and 2000-228028. In the methods described above, information is recorded and reproduced by irradiating a blue laser beam (wavelength: 430 nm, 488 nm) or blue-green laser beam (wavelength: 515 nm) onto an optical disc having a recording layer containing porphyrine compounds, azo dyes, metalazo dyes, quinophthalone dyes, trimethinecyanine dyes, dicyanovinylphenyl skeleton dyes, coumarin compounds and naphthalocyanine compounds.

Unfortunately, the optical discs described in the above patent publications can not obtain the sensitivity required for practical use when recording information by irradiation of a short wavelength laser beam at a wavelength of 380 to 500 nm. Particularly, in the optical discs described in the above patent publications, the recording characteristics actually deteriorated when irradiating a laser beam with a wavelength of 380 to 500 nm. More specifically, read-out stability requirements (i.e. 1 000 000 cycles at 0.4 mW) are generally not reached with systems as described above.

It is an object of the present invention to provide an optical data recording medium that is capable of recording at high density with high recording characteristics and with improved read-out stabilities. Another objective of the invention is to provide an optical information recording method that can provide stable recording and reproducing characteristics, as well as an optical information recording medium on which information has been recorded by the recording method.

It has been found, that specific metalazo complex dyes are useful as dye components in optical layers for improving recording properties of cyanine dyes. These products show very interesting recording characteristics and good overall performances when applied in recording media.

Surprisingly it has now been found, that anionic metalazo complex dyes together with cationic Basic Yellow dyes significantly improve the recording characteristics in particular readout stability, and overall performances when applied as dye components in optical data recording media.

The invention therefore relates to Basic Yellow dyes as dye component for use in an optical layer and to the use of said optical layers for optical data recording media. Particularly, the invention relates to a heat mode type optical data recording medium, which employs a Basic Yellow dye together with a metalazo complex dye in the optical layer. More particularly, the invention relates to a write once read many (WORM) type optical data recording medium capable of recording and reproducing information with radiation of blue laser of preferably 405 nm, which employs a Basic Yellow dye together with a metalazo complex dye and a further recording dye in the optical layer.

The present invention is directed to an optical layer for an optical data recording medium comprising at least one Basic Yellow dye together with at least one metalazo complex dye as dye components.

Halogen represents F, Cl, Br or J, preferably F, Cl or Br, more preferably F or Cl, even more preferably Cl, in the following, if not otherwise stated.

In particular, the present invention is directed to an optical layer for an optical data recording medium comprising at least one Basic Yellow cationic dye together with at least one anionic metalazo complex dye as counter ion, represented by the general formula (I) or (II) 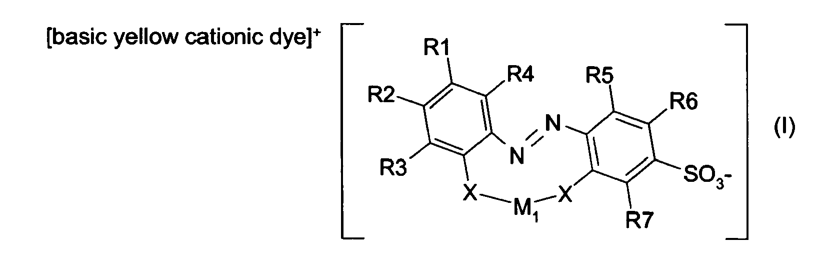 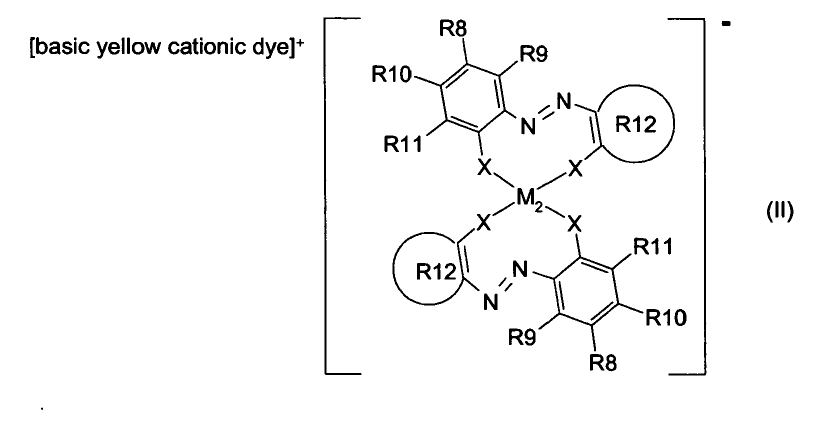 wherein
- M₁: is selected from Ni, Cu, Zn, Mg;
- M₂: is selected from Co, Cr, Fe, Al;
- R₁, R₂, R₃, R₄, R₅, R₆, R₇, R₈, R₉, R_{10,} R₁₁: independently of each other, represent hydrogen, hydroxy, halogen, cyano, nitro, alkyl, aryl, amino, alkylamino, dialkylamino, arylamino, diarylamino, dialkylamino-alkyl, heteroaryl, alkoxy, alkylthio, aryloxy, arylthio, SO₃H, SO₂NR₂₁R₂₂, CO₂R₂₂, CONR₂₁R₂₂, NHCOR₂₂, wherein
R₂₁ is hydrogen, C₁₋₆alkyl, C₆₋₁₀aryl, C₁₋₆alkoxy and
R₂₂ is hydrogen, C₁₋₆alkyl, C₆₋₁₀aryl, C₁₋₆alkoxy;
- each R₁₂: independently, together with the -C=C- group to which they are attached, forms an aromatic cycle unsubstituted or substituted (with substituents being halogen, C₁₋₁₀ alkyl, dicyanomethylene, cyano, carboxy, C₁₋₁₀ alkyl carboxylate, sulfonamide or nitro), or a heterocycle unsubstituted or substituted (with substituents being halogen, C₁₋₁₀ alkyl, dicyanomethylene, cyano, carboxy, C₁₋₁₀ alkyl carboxylate, sulfonamide or nitro);
- X: is a deprotonated residue derived from hydroxyl, amino, carbonamido or sulfonamide;
the Basic Yellow cationic dye component can be selected from the group of the cations consisting of the cations of Basic Yellow 1, Basic Yellow 2, Basic Yellow 11, Basic Yellow 13, Basic Yellow 21, Basic Yellow 24, Basic Yellow 29, Basic Yellow 37, Basic Yellow 49, Basic Yellow 51, Basic Yellow 57, Basic Yellow 90. The Basic Yellow Dyes are commercially available.

Preferably the Basic Yellow cationic dye component is selected from

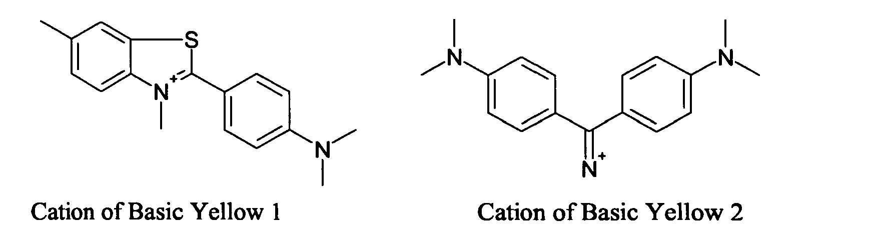

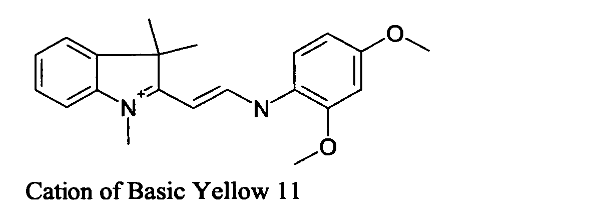

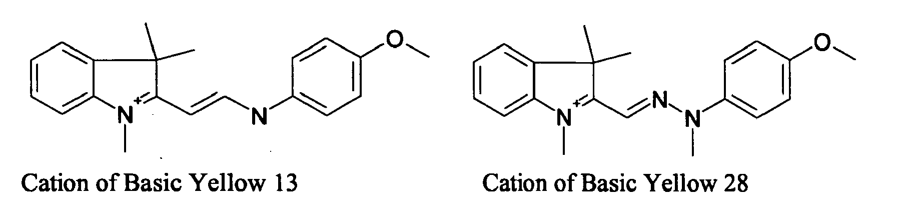

Preferably the present invention is directed to an optical layer for an optical data recording medium comprising at least one Basic Yellow cationic dye together with at least one anionic metalazo complex dye as counterion, represented by the general formula (II) wherein
- M₂: is selected from Co or Cr;
- R₉ and: R₁₁ represent hydrogen; and
- R₈: is selected from hydrogen, nitro or SO₂NR₂₁R₂₂, wherein
R₂₁ is hydrogen, and
R₂₂ is C₁₋₆alkyl;
- R₁₀: is selected from hydrogen or nitro;
more preferably either R₈ is selected from nitro or SO₂NR₂₁R₂₂ in case of R₁₀ being hydrogen, or R₈ is hydrogen in case of R₁₀ being nitro;
- X: is a deprotonated residue derived from hydroxyl; and
- R₁₂: is of formula (a)-(d), with the * and ** indicating the -C=C- group to which they are attached, 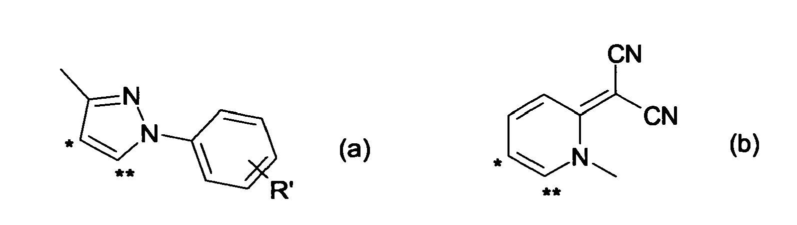 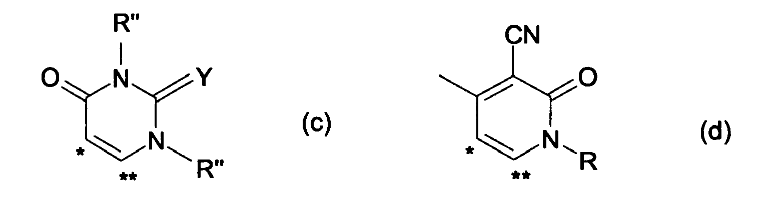
wherein
- R: is C₁₋₄ alkyl or -NH-phenyl; preferably R is n-butyl;
- R': is H or Cl; preferably R' is Cl in para-position;
- R": is C₁₋₄ alkyl, preferably methyl or ethyl;
- Y: is O or S;
more preferably R" is methyl in case of Y being O, or R" is ethyl in case of Y being S.

Most preferred anionic metalazo complex dyes as counterions of the dye compound of formula (II) are selected from the group consisting of the compounds of formula (A) to (F).

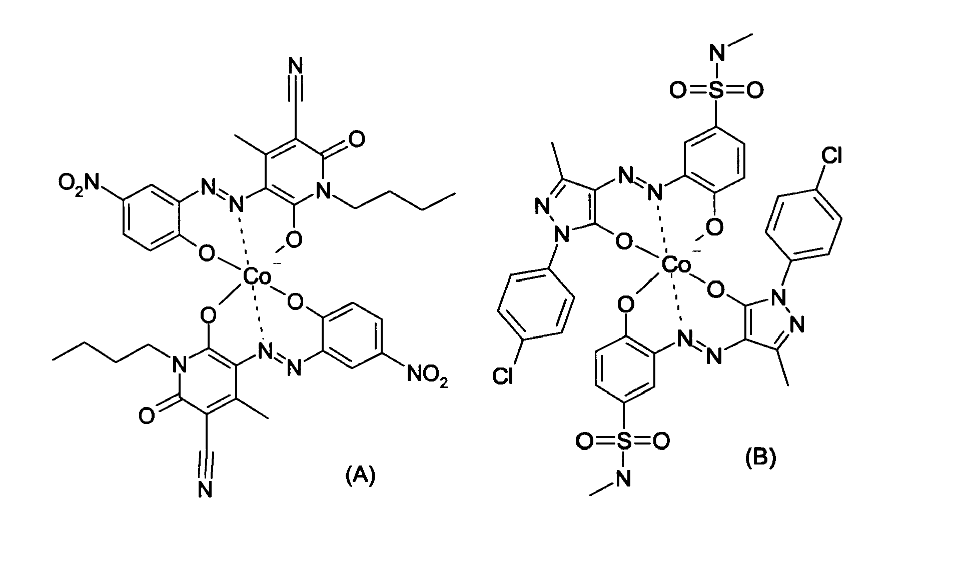

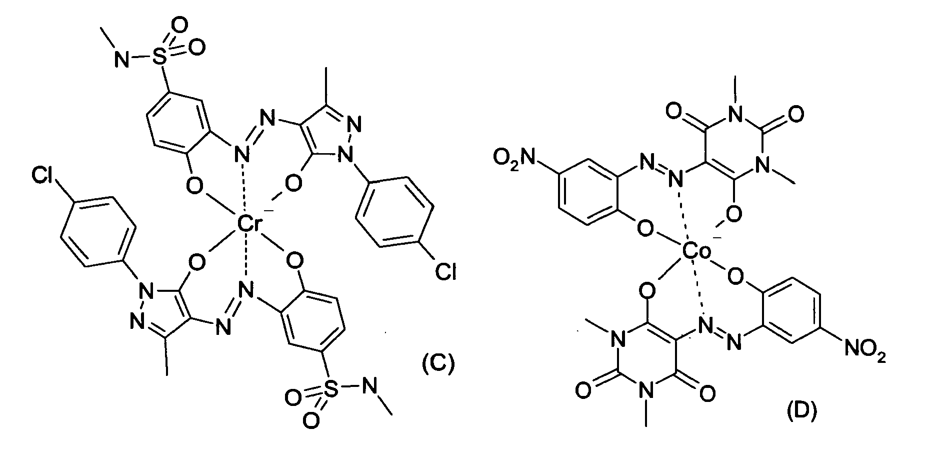

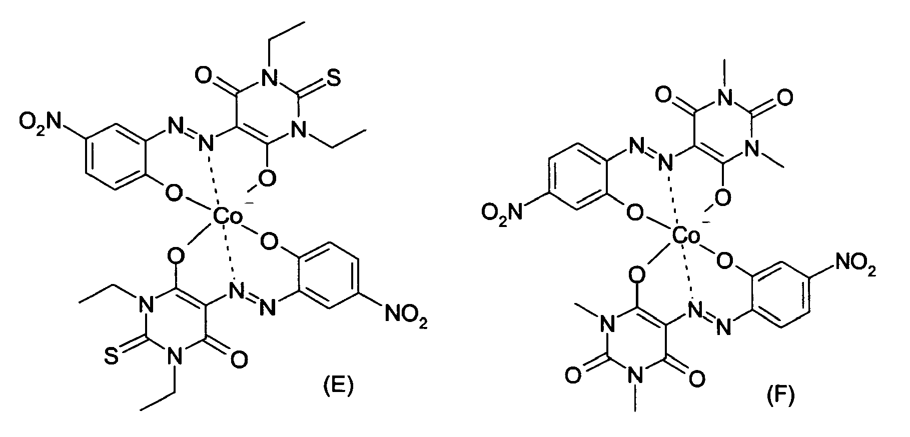

An optical layer according to the invention comprises a compound of formula (I) or (II) or a mixture of compounds of formula (I) and (II).

In a preferred aspect the optical layer according to the invention comprises a compound of formula (I) or (II) together with a further recording dye. The optical layer according to the invention thereby comprise compounds of formula (I) or (II) preferably in an amount of at least 20% by weight of the mixture.

The further recording dye preferably is a dye compound of formula (III) 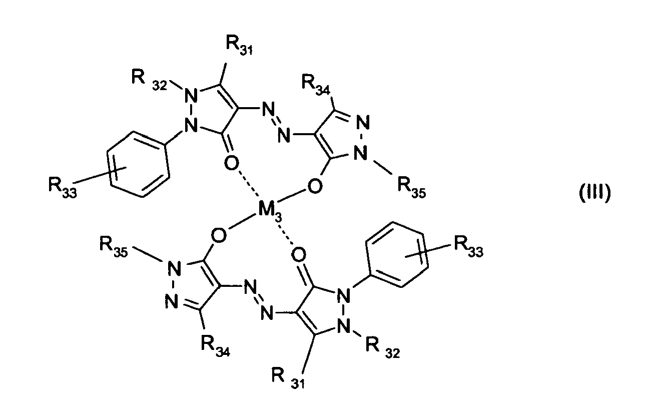 wherein
- M₃: represents a metal atom;
- R₃₁ and: R₃₄ independently from each other are selected from the group consisting of hydrogen, C₁₋₁₀ alkyl, C₅₋₁₀ cycloalkyl, the alkyl groups being optionally substituted by halogen; C₁₋₁₀ alkoxy, unsubstituted phenyl or substituted phenyl (with substituents being halogen, C₁₋₁₀ alkyl or nitro), unsubstituted benzyl or substituted benzyl (with substituents being halogen, C₁₋₁₀ alkyl or nitro), carboxy and C₁₋₁₀ alkyl carboxylate;
- R₃₂: is selected from C₁₋₁₀ alkyl, C₅₋₁₀ cycloalkyl, the alkyl groups being substituted by halogen;
- R₃₃: is selected from hydrogen, -Cl, -CN, -Br, -CF₃, C₁₋₈ alkyl, chloromethyl, C₁₋₈-alkoxymethyl or phenoxymethyl, NO₂ or sulfonamide;
- R₃₅: is selected from hydrogen, C₁₋₁₀ alkyl, C₅₋₁₀ cycloalkyl, the alkyl groups being optionally substituted by halogen; C₁₋₁₀ alkoxy, unsubstituted phenyl or substituted phenyl (with substituents being halogen, C₁₋₁₀ alkyl or nitro), unsubstituted benzyl or substituted benzyl (with substituents being halogen, C₁₋₁₀ alkyl or nitro), carboxy or C₁₋₁₀ alkyl carboxylate.

Further, the invention relates to a method for producing an optical layer, comprising the following steps
(a) providing a substrate
(b) dissolving a dye compound or a mixture of dye compounds of formula (I) or (II) in an organic solvent to form a solution,
(c) coating the solution (b) on the substrate (a);
(d) evaporating the solvent to form a dye film.
   Preferred substrates are polycarbonate (PC) or polymethylmethacrylate (PMMA).
   Organic solvents are selected from C₁₋₈ alcohol, halogen substituted C₁₋₈ alcohols, C₁₋₈ ketone, C₁₋₈ ether, halogen substituted C₁₋₄ alkane, or amides.
   Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.
   Preferred C₁₋₈ ketones are for example acetone, methylisobutylketone, methylethylketone, or 3-hydroxy-3-methyl-2-butanone.
   Preferred halogen substituted C₁₋₄ alkanes are for example chloroform, dichloromethane or 1-chlorobutane.
   Preferred amides are for example dimethylformamide or dimethylacetamide.
   The optical layer (dye layer) obtained preferably has a thickness from 70 to 250 nm.
   In a preferred aspect, the present invention provides for an optical layer suitable for high-density recording material, e.g. of the WORM disc format, in a laser wavelength range of from 350-450nm, preferably around 405 nm.
   The dye compounds of formula (I) and (II) possess the required optical characteristics (such as high absorption and high recording sensitivity), an excellent solubility in organic solvents, an excellent light stability and a decomposition temperature of 250-400°C.
   A method for producing an optical recording medium comprising an optical layer according to the invention comprises the following additional steps
(e) sputtering a metal layer onto the dye layer
(f) applying a second polymer based layer to complete the disc.

A high-density optical data recording medium according to the invention therefore preferably is a recordable optical disc comprising: a first substrate, which is a transparent substrate with grooves, a recording layer (optical layer), which is formed on the first substrate surface using the dye of formula (I) or (II), most preferably a dye of formula (I) or (II) and a recording dye of the formula (III), a reflective layer formed on the recording layer, a second substrate, which is a transparent substrate with grooves connected to the reflective layer with an attachment layer.

Most preferably, the optical data recording medium according to the invention is a recordable optical disc of the WORM type. It may be used, for example, as a playable HD-DVD (high density digital versatile disc) or Blu-ray^{®} disc, as storage medium for a computer or as an identification and security card or for the production of diffractive optical elements, for example holograms.

The invention accordingly relates also to a method for the optical recording, storage and playback of information, wherein a recording medium according to the invention is used. The recording and the playback advantageously take place in a wavelength range of from 350 to 500 nm.

### Readout methods

The structure of the optical data recording medium according to the invention is governed primarily by the readout method; known function principles include the measurement of the change in the transmission or, preferably, in the reflection, but it is also known to measure, for example, the fluorescence instead of the transmission or reflection.

When the optical data recording medium is structured for a change in reflection, the following structures can be used: transparent support / recording layer (optionally multilayered) / reflective layer and, if expedient, protective layer (not necessarily transparent); or support (not necessarily transparent) / reflective layer / recording layer and, if expedient, transparent protective layer. In the first case, the light is incident from the support side, whereas in the latter case the radiation is incident from the recording layer side or, where applicable, from the protective layer side. In both cases the light detector is located on the same side as the light source. The first-mentioned structure of the recording material to be used according to the invention is generally preferred.

When the optical data recording medium is structured for a change in light transmission, the following different structure comes into consideration: transparent support/recording layer (optionally multilayered) and, if expedient, transparent protective layer.

The light for recording and for readout can be incident either from the support side or from the recording layer side or, where applicable, from the protective layer side, the light detector in this case always being located on the opposite side.

Suitable lasers are those having a wavelength of 350-500 nm, for example commercially available lasers having a wavelength of 405 to 414 nm, especially semi-conductor lasers. The recording is done, for example, point for point, by modulating the laser in accordance with the mark lengths and focusing its radiation onto the recording layer. It is known from the specialist literature that other methods are currently being developed which may also be suitable for use.

The process according to the invention allows the storage of information with great reliability and stability, distinguished by very good mechanical and thermal stability and by high light stability and by sharp boundary zones of the pits. Special advantages include the high contrast, the low jitter and the surprisingly high signal/noise ratio, so that excellent readout is achieved.

The readout of information is carried out according to methods known in the art by registering the change in absorption or reflection using laser radiation.

The invention accordingly relates also to a method for the optical data recording, storage and playback of information, wherein an optical data recording medium according to the invention is used. The recording and the playback advantageously take place in a wavelength range of from 350 to 500 nm.

The compounds of formula (I) and (II) provide for particularly preferable properties when used in optical layers for optical data recording media according to the invention. They possess the required optical characteristics, demonstrated when used in the form of a solid film:
- an advantageously homogeneous, amorphous and low-scattering optical layer,
- a high refractive index at the longer wavelength flank of the absorption band, which preferably achieves n values of the refractive index of from 1.0 to 3.0 in the range of from 350 to 500 nm,
- a high sensitivity under laser radiation of high power density and good playback characteristics in the desired spectral range,
- an enhanced photosensitivity and stability (in daylight and under laser radiation of low power density) compared to dyes already known in the art,
- an uniform script width and a high contrast,
- an absorption maximum λmax in the preferred range between 390 nm and 470 nm as being preferred for blue laser applications, more precisely from 400 to 460 nm,
- a decomposition point DP in the preferred temperature range between 220°C and 300°C, more precisely 230°C to 290°C
- A sufficient heat release (HR)

Recording performance of a compound is related to specific parameters measured on disc like:
- A low simulated bit error rate (SbER)
- A low inner parity error rate (PI error)
- A high reflectivity (R)
- A low laser recording power (Pw or OPC: optimum power control)
- Good readout stability at several laser reading powers.
- An appropriate partial response signal to noise ratio (PRSNR)

The absorption edge is surprisingly steep even in the solid phase.

The compounds of formula (I) also show a narrow decomposition temperature of 250-350°C, fitting with the thermal requirements. Additionally, these compounds show a high solubility in organic solvents, which is ideal for the spin-coating process to manufacture optical layers.

### Examples

### UV-vis

For UV-vis spectra, λ max and E values of the compound are determined by using an UV-vis spectrophotometer, the compound was dissolved in CH₂Cl₂, DMSO or in tfp. The values are obtained by balancing the measurements performed on compound solutions at three different concentrations.

### Thermal Decomposition: Decomposition point (DP) and heat release (HR)

DP and HR are determined using a TA Instruments DSC Q100 apparatus, the compound being incorporated into a sealed aluminum pan. Analysis conditions are as following: Temperature range from 25 to 400°C, heating rate 10°C/min, nitrogen flow of 50 ml/min. Values are determined by single measurement.

### Partial response signal to noise ratio (PRSNR)

A definition and the measuring techniques of PRSNR are described in a book available from DVD Format Logo Licensing Co., Ltd. for example, Annex H of Version 0.9, PART 1 Physical Specifications, DVD Specifications for High Density Read-Only Disk.

### Simulated bit error rate (SbER)

A definition and the measuring techniques of SbER are described in a book available from DVD Format Logo Licensing Co., Ltd. for example, Annex H of Version 0.9, PART 1 Physical Specifications, DVD Specifications for High Density Read-Only Disk.

PRSNR and SbER are measured in a state in which information has been recorded in the adjacent tracks.

### Reflectivity (R)

A definition and the measuring techniques for the light reflectivity (R) is described in a book available from DVD Format Logo Licensing Co., Ltd. for example, Annex D of Version 0.9, PART 1 Physical Specifications, DVD Specifications for High Density Read-Only Disk.

### Step 1 - Preparation of the azo ligands of the anionic metalazo complex dyes

The azo ligands are prepared by azo coupling reaction of the respective diazo component and the respective coupling agent. The diazo component is prepared by diazotization reaction of the respective amine compound These amine compounds and the coupling agents are known substances.

It is possible to use more than one amine component and/or more than one coupling agent resulting in the respective mixture of azo ligands.

The coupling reaction may be carried out in water, non-aqueous solvents and in mixtures thereof. Non-aqueous solvents are alcohols such as methanol, ethanol, propanol, butanol, pentanol, etc., dipolar aprotic solvents such as DMF, DMSO, NMP and water-immiscible solvents such as toluene or chlorobenzene. Preferably the azo coupling reaction is carried out in water.

The coupling is preferably carried out in a stoichiometric ratio of coupling component and diazo component. The coupling is generally done at temperatures between -30°C to 100°C, preference being given to temperatures of -10°C to 30°C, and particular preference to temperatures of -5°C to 20°C.

The coupling may be carried out in an acidic as well as an alkaline medium. Preference is given to pH <10, particular preference to pH between 3 to 9.0.

Preferably the azo ligand is isolated following standard methods, in case of a precipitate preferably by filtration, and preferably dried.

### Preparation of azo ligands

### Example 1

A mixture of 15.0 g of 2-amino-4-nitrophenol, 120 ml of water and 34.3 g of concentrated hydrochloric acid (30% w/w) was gradually admixed with 24.5 ml of sodium nitrite (33% w/v) at 0°C. After 1 hour of reaction at 0°C, the dark diazotization solution was added drop wise to an alkaline solution of 22.6 g of 1,3-diethyl-2-thiobarbituric acid while maintaining pH at 7.5-9 with sodium hydroxide (30% w/w). The batch was stirred 3 hours, then filtered with suction. The precipitate was washed with water and dried. 34.3 g of the azo ligand of formula (1) was obtained.

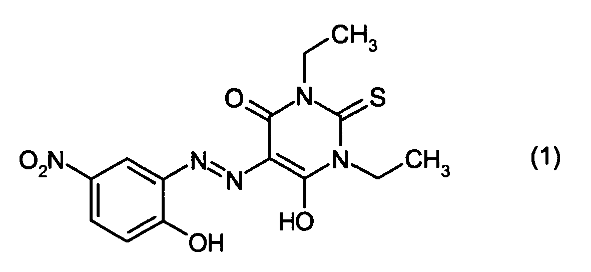

### Example 2

A mixture of 15.0 g of 2-amino-4-nitrophenol, 120 ml of water and 34.3 g of concentrated hydrochloric acid (30% w/w) was gradually admixed with 24.5 ml of sodium nitrite (33% w/v) at 0°C. After 1 hour of reaction at 0°C, the dark diazotization solution was added drop wise to an alkaline solution of 15.1 g of 1,3-dimethyl-barbituric acid while maintaining pH at 7.5-9 with sodium hydroxide (30% w/w). The batch was stirred 3 hours, then filtered with suction. The precipitate was washed with water and dried. 30.1 g of the azo ligand of formula (2) was obtained.

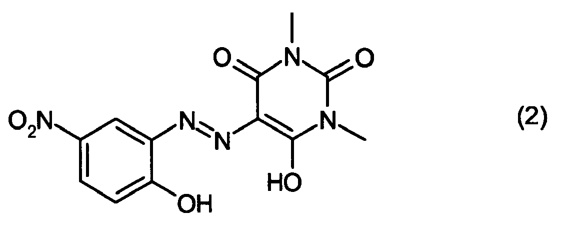

### Example 3

A mixture of 15.0 g of 2-amino-4-nitrophenol, 120 ml of water and 34.3 g of concentrated hydrochloric acid (30% w/w) was gradually admixed with 24.5 ml of sodium nitrite (33% w/v) at 0°C. After 1 hour of reaction at 0°C, the dark diazotization solution was added drop wise to an alkaline solution of 20.6 g of 1-Butyl-4-methyl-2,6-dioxo-1,2,5,6-tetrahydro-pyridine-3-carbonitrile while maintaining pH at 7.5-9 with sodium hydroxide (30% w/w). The batch was stirred 3 hours, then filtered with suction. The precipitate was washed with water and dried. 35.2 g of the azo ligand of formula (3) was obtained.

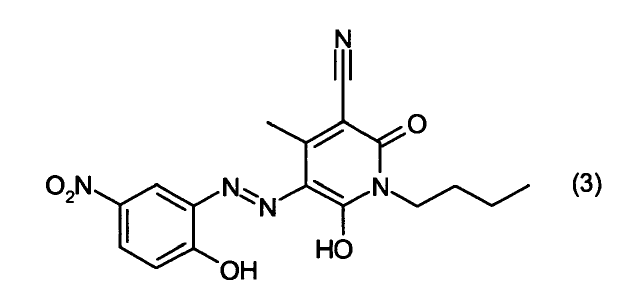

### Example 4

With 2-amino-5-nitrophenol the compound of formula (4) was prepared in analogy to the procedure in example 2, 26 g of the azo ligand of formula (4) was obtained.

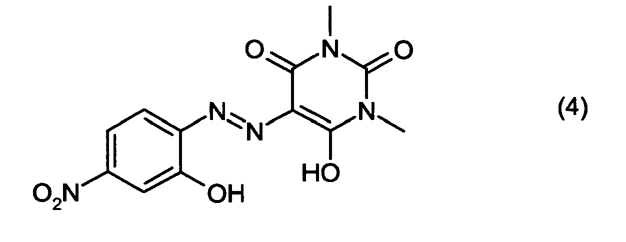

### Step 2 - preparation of the anionic parts of formula (I) or (II)

Preferably, the anionic **parts** of formula (I) are prepared by complexing reaction of a solution of one equivalent of a metal salt with a boiling solution of one equivalent of the ligands above described. The anionic **parts** of formula (II) are prepared by complexing reaction of a solution of one equivalent of a metal salt with a boiling solution of two equivalents of the ligands above described.

In one preferred embodiment of the invention the metal of the metal salt is a trivalent metal. In another preferred embodiment of the invention the metal of the metal salt is a divalent metal, and the complexing reaction is carried out in the presence of preferably 2.5 to 4, more preferably 2.9 to 3.2, especially 3 equivalents of trialkylamine, preferably triethylamine, for each equivalent of ligand. This ensures that the divalent metal atom is converted during the complexing reaction into a trivalent oxidation state, and that the metal atom is incorporated into its four-fold coordination in the complex, resulting in an anionic charge on the final complex. Preferably, when the metal salt is a divalent metal salt, the precursor is preferably cobalt sulfate heptahydrate. It is possible to use more than one azo ligand, preferably a mixture of 2 or 3 azo ligands. Preferably in this case the combined amounts of the ligands should be in the required stoichiometric amounts with regard to the metal salt. It is also possible to use more than one metal salt, preferably a mixture of 2 or 3 metal salts, preferably in the required stoichiometric amounts with regard to the azo ligands; and a combination of these measures is also possible. The ligands can be added to the metal salt or vice versa.

### Metal complex dye by complexing reaction

### Example 5

7.6 g of ligand of formula (3) prepared according to example 3 are suspended in 80 ml of acetonitrile. After 15 minutes stirring at reflux, 6.7 g of triethylamine are added to the mixture. 4.16 g of cobalt sulfate heptahydrate are then added for over 15 minutes, whereupon a dark orange solution of the cobalt complex dye results. The mixture is heated at reflux for 6 hours and then cooled down to room temperature. The resulting precipitate is filtered off and the press cake washed with deionized water and dried. 16.8 g of the cobalt complex dye of the formula (A) with protonated triethylamine as counterion is obtained.

### Example 6

The cobalt complex dye of formula (B) was prepared according to the procedure of example 5, using the respective ligand.

### Example 7

2,6 g of chromium acetate (0.013 moles) are dissolved in 20 mL of distilled water. 11g of azo ligand are suspended in 50 mL of water and the pH of the reaction mixture is adjusted to 7.0 by adding sodium hydroxide. The reaction mixture is heated up to reflux

The solution of Cr₃(OAc)₇(OH)₂ is then slowly added over a period of 1h. The reaction mixture slowly turns into a dark red solution. When the reaction is complete, the reaction mixture is cooled down to 50°Cand dropped slowly into an aqueous solution of triethylammonium chloride. 9 g of the chromium complex dye of the formula (C) with protonated triethylamine as counterion is obtained after filtration, aqueous washing and drying of the precipitate.

### Example 8

7.4 g of ligand of formula (1) prepared according to example 1 are suspended in 80 ml of acetonitrile. After 15 minutes stirring at reflux, 6.7 g of triethylamine are added to the mixture. 4.16 g of cobalt sulfate heptahydrate are then added for over 15 minutes, whereupon a dark yellow solution of the cobalt complex dye results. The mixture is heated at reflux for 6 hours and then cooled down to room temperature. The resulting precipitate is filtered off and the press cake washed with deionized water and dried. 13.8 g of the cobalt complex dye of the formula (E) with protonated triethylamine as counterion is obtained.

### Example 9

6.6 g of ligand of formula (2) prepared according to example 2 are suspended in 80 ml of acetonitrile. After 15 minutes stirring at reflux, 6.7 g of triethylamine are added to the mixture. 4.16 g of cobalt sulfate heptahydrate are then added for over 15 minutes, whereupon a dark yellow solution of the cobalt complex dye results. The mixture is heated at reflux for 6 hours and then cooled down to room temperature. The resulting precipitate is filtered off and the press cake washed with deionized water and dried. 14.2 g of the cobalt complex dye of the formula (D) with protonated triethylamine as counterion is obtained.

### Example 10

6.6 g of ligand of formula (4) prepared according to example 4 are suspended in 80 ml of acetonitrile. After 15 minutes stirring at reflux, 6.7 g of triethylamine are added to the mixture. 4.16 g of cobalt sulfate heptahydrate are then added for over 15 minutes, whereupon a dark yellow solution of the cobalt complex dye results. The mixture is heated at reflux for 6 hours and then cooled down to room temperature. The resulting precipitate is filtered off and the press cake washed with deionized water and dried. 14.2 g of the cobalt complex dye of the formula (F) with protonated triethylamine as counterion is obtained.

### Step 3 - preparation of the compounds of formula (I) or (II)

The following complex dyes, listed in Table 1 and 2, have been prepared by reacting the commercially available Basic Yellow dyes with the anionic metalazo complex dyes, prepared according to examples 5 to 10, as represented below according to the following procedure.

### Preparation exemplified for complex dye 13(A):

5.4 g of the Azo metal complex A (complex dye of the formula (A)) with protonated triethylamine as counterion, prepared according to example 5, and 2.1 g of Basic Yellow 13 are suspended in 120 ml of ethanol. The mixture is heated to reflux and kept at this temperature for 4 hours. The obtained red suspension is cooled to room temperature and the resulting precipitate is filtered with suction and washed with a further 50ml of ethanol and 500ml of water. The compound 13(A) is obtained with 86.4% yield.

| **Table 1** | | | |
|---|---|---|---|
| **Cat⁺** | ***An⁻*** | | |
| | ***Complex A*** | ***Complex B*** | ***Complex C*** |
| **Basic Yellow 1** | 1(A) | 1(B) | 1(C) |
| **Basic Yellow 2** | 2(A) | 2(B) | 2(C) |
| **Basic Yellow 11** | 11(A) | 11(B) | 11(C) |
| **Basic Yellow 13** | 13(A) | 13(B) | 13(C) |
| **Basic Yellow 28** | 28(A) | 28(B) | 28(C) |

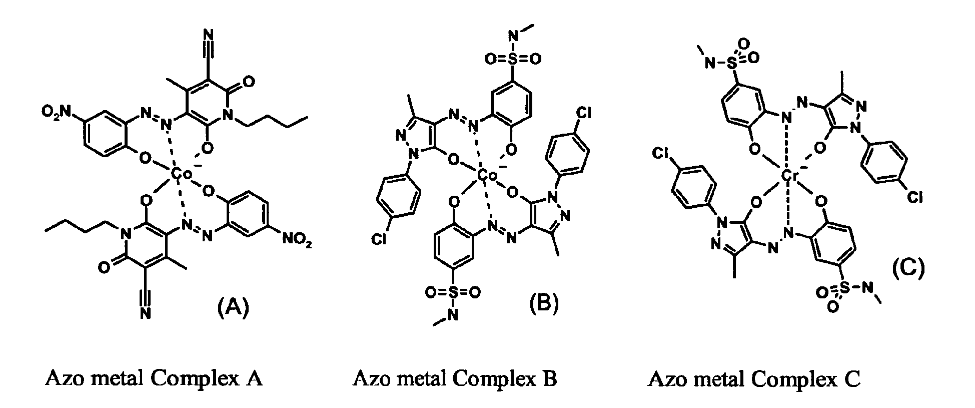

| **Table 2** | | | |
|---|---|---|---|
| **Cat⁺** | ***An⁻*** | | |
| | ***Complex D*** | ***Complex E*** | ***Complex F*** |
| **Basic Yellow 1** | 1(D) | 1(E) | 1(F) |
| **Basic Yellow 2** | 2(D) | 2(E) | 2(F) |
| **Basic Yellow 11** | 11(D) | 11(E) | 11(F) |
| **Basic Yellow 13** | 13(D) | 13(E) | 13(F) |
| **Basic Yellow 28** | 28(D) | 28(E) | 28(F) |

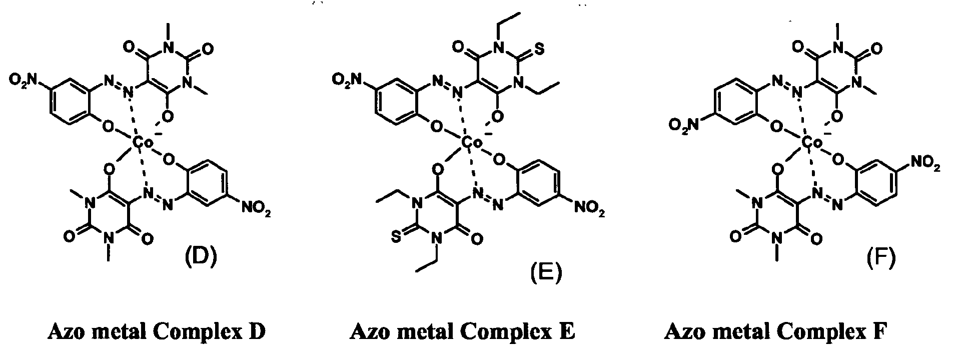

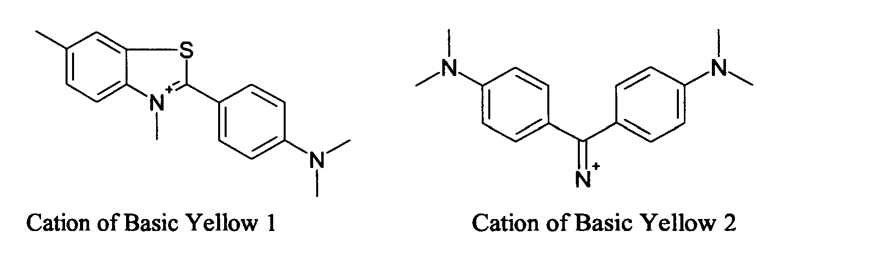

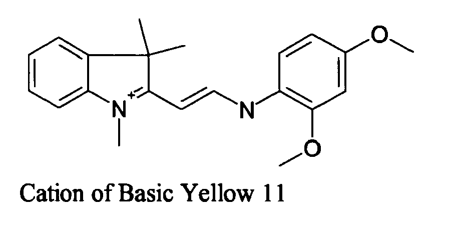

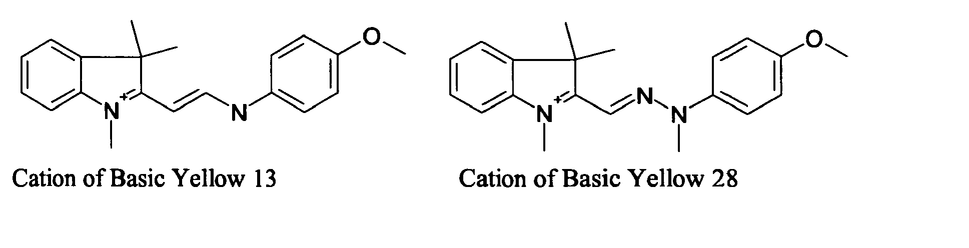

Table 4 gives the properties of some of the prepared complex dyes of tables 1 and 2. As a reference, the decomposition point of the Azo metal Complex A with protonated triethylamine as counterion is at 327°C, (single peak), i.e. indicating that a new compound is formed when the decomposition temperature (single peak) for the complex dyes of table 1 and 2 is different from the reference. Table 3 gives some DP as a reference for the complexes with protonated triethylammonium as counterion.

| **Table 3** | |
|---|---|
| **Metal complex** | **DP [°C]** |
| **A** | 327 |
| **B** | 292 |
| **D** | 310 |
| **E** | 296 |

**Table 4**: optical and thermal analysis (DP [°C] are all single peak)

| **Table 4** | | | |
|---|---|---|---|
| **Complex dye** | **λ max** | **ε (at λ max)** | **DP [°C]** |
| 1(A) | 440 | 68 | 258 |
| 2(A) | 476 | 101 | 310 |
| 11(A) | 478 | 65 | 299 |
| 13(A) | 482 | 53 | 307 |
| 28(A) | 481 | 66 | 290 |
| 1(B) | 436 | 61 | 312 |
| 2(B) | 469 | 78 | 300 |
| 11(B) | 446 | 52 | 299 |
| 13(B) | 437 | 55 | 301 |
| 28(B) | 464 | 43 | 274 |
| 1(C) | 436 | 54 | 321 |
| 2(C) | 470 | 64 | 323 |
| 11(C) | 442 | 42 | 304 |
| 13(C) | 435 | 46 | 314 |
| 28(C) | 470 | 44 | 273 |
| 28(D) | 459 | 48 | 285 |
| 28(E) | 425 | 62 | 272 |
| 28(F) | 447 | 54 | 270 |

### Application Example 1

The optical and thermal properties of the compounds of formula (I) and (II) were studied. The compounds of formula (I) and (II) show high absorption at the desired wavelengths. In addition, the shapes of the absorption spectra, that still remain critical to the disc reflectivity and formation of clean mark edges, are composed of one major band, comprised in a range of from 350 to 500 nm.

More precisely, n values of the refractive index were evaluated between 1.0 and 2.7. Light stabilities were found comparable to commercial dyes which are already stabilized with quenchers for the use in optical data recording.

Sharp threshold of thermal decomposition within the required temperature range characterizes the compounds of formula (I) and (II) which are desirable for the application in optical layers for optical data recording.

### Application Example 2 - Optical layer and optical data recording medium

1.4% by weight of the mixture according to Example 1 are dissolved in 2,2,3,3-tetrafluoro-1-propanol and the solution is filtered through a Teflon filter of pore size 0.2 µm and applied by spin-coating at 1000 rpm to the surface of a 0.6 mm thick, grooved polycarbonate disc of 120 mm diameter. The excess solution is spun off by increasing the rotational speed. On evaporation of the solvent, the dye remains behind in the form of a uniform, amorphous solid layer, the optical layer. After drying the optical layer in a circulating-air oven at 70°C (10 min) in a vacuum coating apparatus, a 100 µm thick silver layer is then applied to the recording layer by atomisation. Then a 6 µm thick protective layer of a UV curable photopolymer (650-020, DSM) is applied thereto by means of spincoating. Finally, a second substrate is provided to combine with the resin protection layer using an attachment layer. This completes the manufacturing of a high-density recordable optical disc, the optical data recording medium.

### Evaluation tests are performed using an optical disk evaluation device available from Pulse Tech Co., Ltd.

The testing conditions are the following ones:
- Numerical aperture (NA) of the optical head: 0.65
- Wavelength of a laser light for recording and reproduction: 405 nm
- Constant linear velocity (CLV): 6.61 m/sec.
- Track pitch: 400 nm
- Wobble amplitude of the groove track: 14 nm
- Groove depth: 90 nm.

Results of the evaluation tests for some of the complex dyes of table 1 and 2 are summarized in table 5:

| **Table 5** | | | | |
|---|---|---|---|---|
| **Complex Dye** | **Pw** | **SbER** | **PRSNR** | **reflectivity** |
| | **[mW[** | | **[db]** | **[%]** |
| 28(B) | 8,6 | 4,40E-07 | 20,4 | 20,2 |
| 13(B) | 9,5 | 3,60E-04 | 10,3 | 18,6 |
| 13(C) | 9,2 | 8,00E-04 | 8,6 | 26,8 |
| 11(A) | 9,0 | 7,60E-06 | 15,8 | 17,9 |
| 11(B) | 10,4 | 7,70E-04 | 9,1 | 21,1 |
| 11(C) | 8,6 | 3,00E-05 | 13,9 | 19,1 |
| 28(C) | 8,0 | 3,20E-06 | 22,3 | 19,4 |
| 28(A) | 7,6 | 3,60E-07 | 25,9 | 19,7 |
| 13(A) | 9,0 | 5,10E-06 | 20,3 | 19,6 |

A test for evaluating a degree of degradation due to repetition reproduction is conducted for each of the write-once optical disks made for the described dye recording layers. Readings are carried out at a reading laser power of 0.4 mW and the degrees of degradation of PRSNR and SbER are then measured. Maximum cycles number was found at 1 622 000 for the composition 28(A).

## Claims

1. An optical data recording medium comprising an optical layer comprising a dye compound of formula (I) or (II) 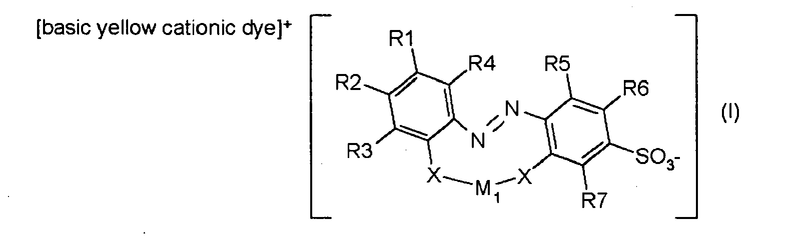 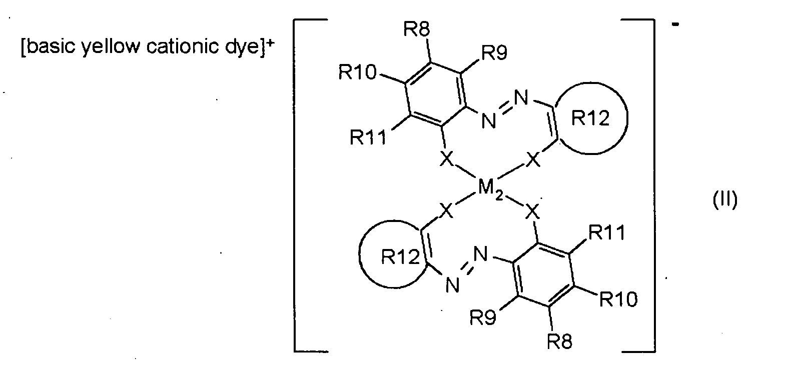 wherein
M₁ is selected from Ni, Cu, Zn, Mg;
M₂ is selected from Co, Cr, Fe, Al;
R₁, R₂, R₃, R₄, R₅, R₆, R₇, R₈, R₉, R₁₀, R₁₁ independently of each other, represent hydrogen, hydroxy, halogen, cyano, nitro, alkyl, aryl, amino, alkylamino, dialkylamino, arylamino, diarylamino, dialkylamino-alkyl, heteroaryl, alkoxy, alkylthio, aryloxy, arylthio, SO₃H, SO₂NR₂₁R₂₂, CO₂R₂₂, CONR₂₁R₂₂, NHCOR₂₂, wherein
R₂₁ is hydrogen, C₁₋₆alkyl, C₆₋₁₀aryl, C₁₋₆alkoxy and
R₂₂ is hydrogen, C₁₋₆alkyl, C₆₋₁₀aryl, C₁₋₆alkoxy;
each R₁₂ independently, together with the -C=C- group to which they are attached, forms an aromatic cycle unsubstituted or substituted (with substituents being halogen, C₁₋₁₀ alkyl, dicyanomethylene, cyano, carboxy, C₁₋₁₀ alkyl carboxylate, sulfonamide or nitro), or a heterocycle unsubstituted or substituted (with substituents being halogen, C₁₋₁₀ alkyl, dicyanomethylene, cyano, carboxy, C₁₋₁₀ alkyl carboxylate, sulfonamide or nitro);
X is a deprotonated residue derived from hydroxyl, amino, carbonamido or sulfonamide;
the Basic Yellow cationic dye component being selected from the group of cations consisting of the cations of Basic Yellow 1, Basic Yellow 2, Basic Yellow 11, Basic Yellow 13, Basic Yellow 21, Basic Yellow 24, Basic Yellow 29, Basic Yellow 37, Basic Yellow 49, Basic Yellow 51, Basic Yellow 57, Basic Yellow 90.

2. An optical data recording medium comprising an optical layer according to claim 1, wherein the dye compound is of formula (II) and wherein
M₂ is selected from Co or Cr;
R₉ and R₁₁ represent hydrogen; and
R₈ is selected from hydrogen, nitro or SO₂NR₂₁R₂₂, wherein
R₂₁ is hydrogen, and
R₂₂ is C₁₋₆alkyl;
R₁₀ is selected from hydrogen or nitro;
X is a deprotonated residue derived from hydroxyl; and
R₁₂ is of formula (a)-(d), with the * and ** indicating the -C=C- group to which they are attached, 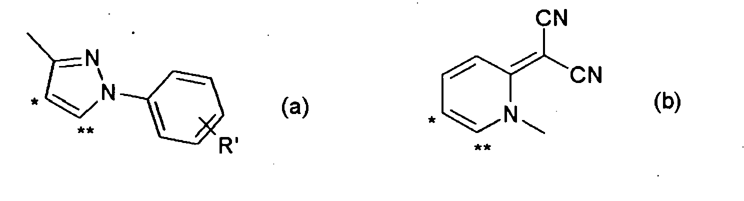 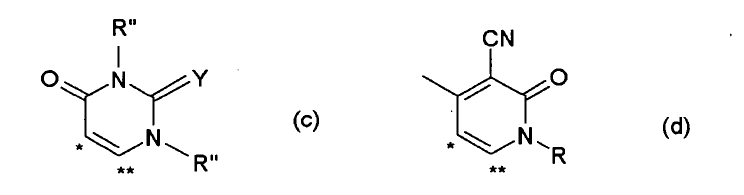
wherein
R is C₁₋₄ alkyl or -NH-phenyl; preferably R is n-butyl;
R' is H or Cl; preferably R' is Cl in para-position;
R" is C₁₋₄ alkyl, preferably methyl or ethyl;
Y is O or S.

3. An optical data recording medium comprising an optical layer according to claim 1 or 2, wherein the dye compound is of formula (II) and wherein the Basic Yellow cationic dye component is selected from

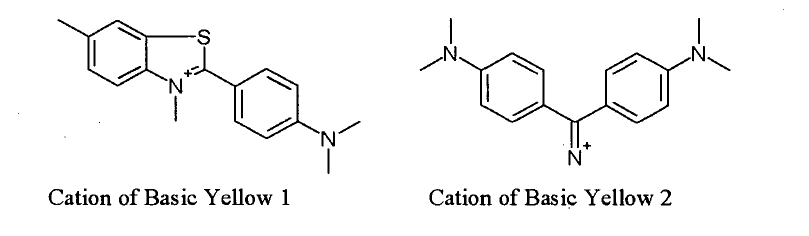

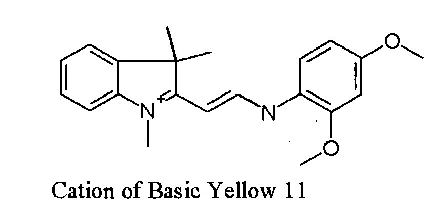

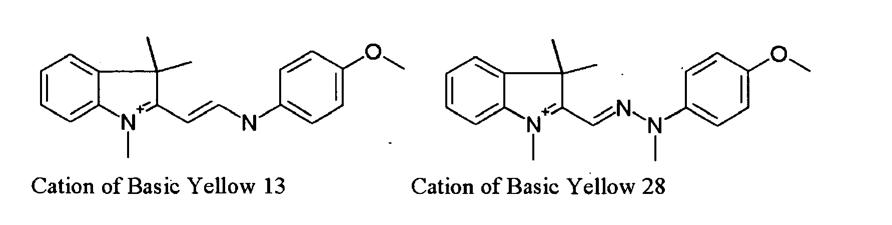

4. An optical data recording medium comprising an optical layer according to one or more of claims 1 to 3, wherein the anionic counterion of the dye compound of formula (II) is selected from the group consisting of compounds of the formula (A) to (F).

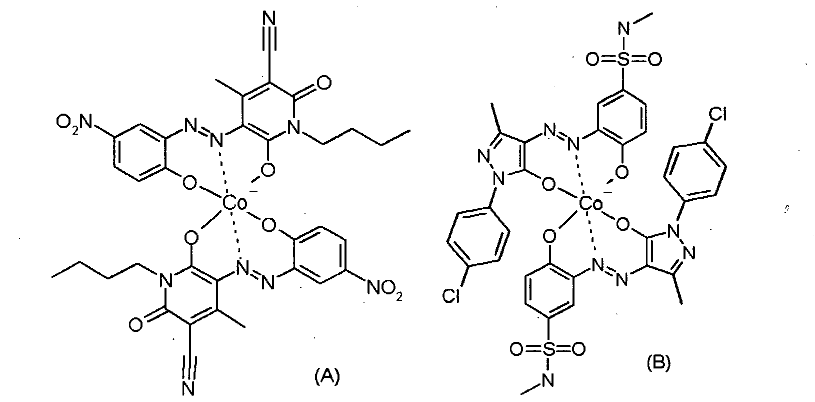

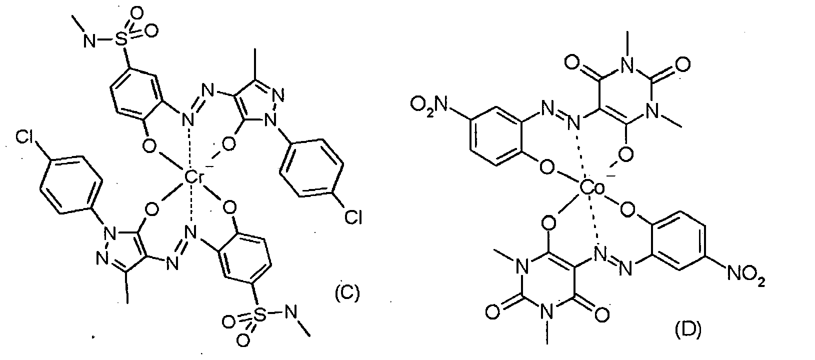

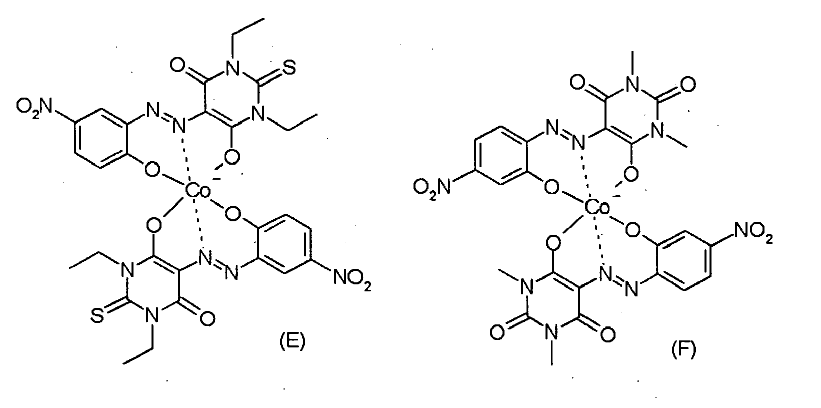

5. An optical data recording medium comprising an optical layer according to claim 1, wherein the optical layer comprises a compound of formula (I) or (II) together with a recording dye of formula (III) 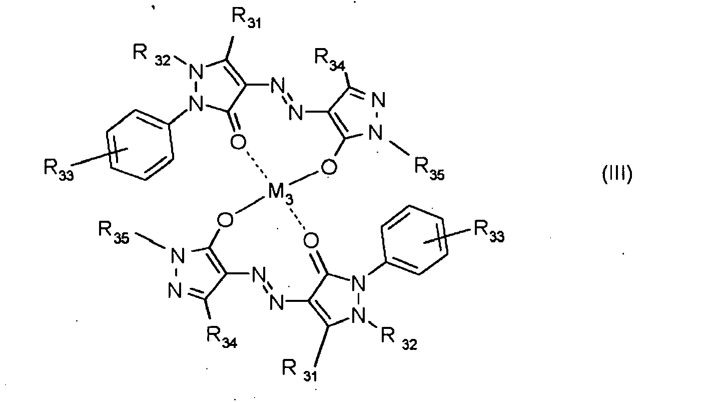 wherein
M₃ represents a metal atom;
R₃₁ and R₃₄ independently from each other are selected from the group consisting of hydrogen, C₁₋₁₀ alkyl, C₅₋₁₀ cycloalkyl, the alkyl groups being optionally substituted by halogen; C₁₋₁₀ alkoxy, unsubstituted phenyl or substituted phenyl (with substituents being halogen, C₁₋₁₀ alkyl or nitro), unsubstituted benzyl or substituted benzyl (with substituents being halogen, C₁₋₁₀ alkyl or nitro), carboxy and C₁₋₁₀ alkyl carboxylate;
R₃₂ is selected from C₁₋₁₀ alkyl, C₅₋₁₀ cycloalkyl, the alkyl groups being substituted by halogen;
R₃₃ is selected from hydrogen, -Cl, -CN, -Br, -CF₃, C₁₋₈ alkyl, chloromethyl, C₁₋₈-alkoxymethyl or phenoxymethyl, NO₂ or sulfonamide;
R₃₅ is selected from hydrogen, C₁₋₁₀ alkyl, C₅₋₁₀ cycloalkyl, the alkyl groups being optionally substituted by halogen; C₁₋₁₀ alkoxy, unsubstituted phenyl or substituted phenyl (with substituents being halogen, C₁₋₁₀ alkyl or nitro), unsubstituted benzyl or substituted benzyl (with substituents being halogen, C₁₋₁₀ alkyl or nitro), carboxy or C₁₋₁₀ alkyl carboxylate.

6. A method for producing an optical data recording medium comprising an optical layer according to one or more of claims 1 to 5, comprising the following steps
(a) providing a substrate
(b) dissolving a dye compound of formula (I) or (II) as defined in claims 1 to 4, or a mixture of dye compounds as defined in claim 5, in an organic solvent to form a solution,
(c) coating the solution (b) on the substrate (a);
(d) evaporating the solvent to form a dye film;
(e) sputtering a metal layer onto the dye layer;
(f) applying a second polymer based layer to complete the disc.

7. A method according to claim 6, wherein the substrate is selected from polycarbonate (PC) or amorphous polyolefins.

8. A method according to claim 6 or 7, wherein the organic solvent is selected from C₁₋₈ alcohol, halogen substituted C₁₋₈ alcohols, C₁₋₈ ketone, C₁₋₈ ether, halogen substituted C₁₋₄ alkane, or amides.

9. A method according to one or more of claims 6 to 8, wherein the optical layer obtained has a thickness from 70 to 250 nm.

## Patentansprüche

1. Optisches Datenaufzeichnungsmedium mit einer optischen Schicht, die einen Farbstoff der Formel (I) oder (II) umfaßt: 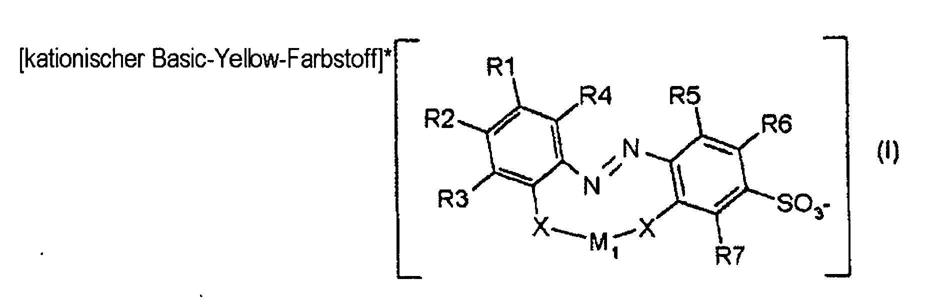 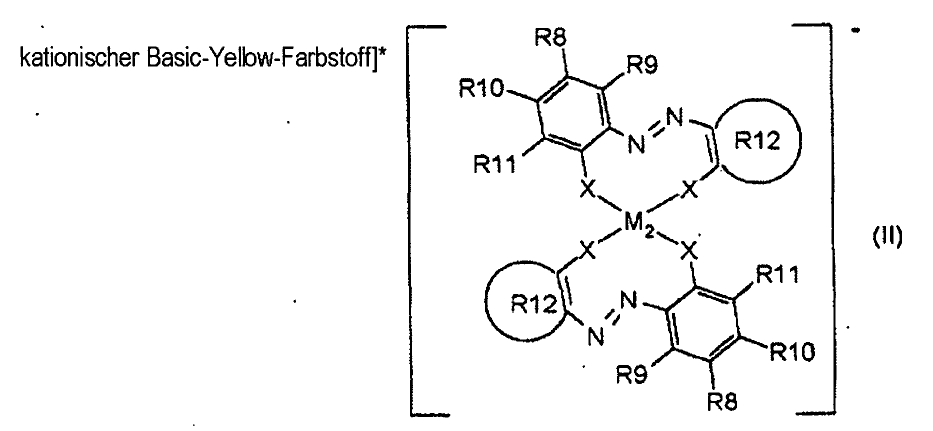 worin
M₁ unter Ni, Cu, Zn und Mg ausgewählt ist;
M₂ unter Co, Cr, Fe und Al ausgewählt ist;
R₁, R₂, R₃, R₄, R₅, R₆, R₇, R₈, R₉, R₁₀ und R₁₁ unabhängig voneinander für Wasserstoff, Hydroxy, Halogen, Cyano, Nitro, Alkyl, Aryl, Amino, Alkylamino, Dialkylamino, Arylamino, Diarylamino, Dialkylaminoalkyl, Heteroaryl, Alkoxy, Alkylthio, Aryloxy, Arylthio, SO₃H, SO₂NR₂₁R₂₂, CO₂R₂₂, CONR₂₁R₂₂ und NHCOR₂₂ stehen, wobei
R₂₁ für Wasserstoff, C₁₋₆-Alkyl, C₆₋₁₀-Aryl oder C₁₋₆-Alkoxy steht und
R₂₂ für Wasserstoff, C₁₋₆-Alkyl, C₆₋₁₀-Aryl oder C₁₋₆-Alkoxy steht;
jedes R₁₂ unabhängig zusammen mit der -C=C-Gruppe, an die sie gebunden sind, einen aromatischen Ring, der gegebenenfalls substituiert ist (wobei es sich bei den Substituenten um Halogen, C₁₋₁₀-Alkyl, Dicyanomethylen, Cyano, Carboxy, C₁₋₁₀-Alkylcarboxylat, Sulfonamid oder Nitro handelt), oder einen Heterocyclus, der gegebenenfalls substituiert ist (wobei es sich bei den Substituenten um Halogen, C₁₋₁₀-Alkyl, Dicyanomethylen, Cyano, Carboxy, C₁₋₁₀-Alkylcarboxylat, Sulfonamid oder Nitro handelt), bildet;
X für einen deprotonierten Rest steht, der sich von Hydroxyl, Amino, Carbonamido oder Sulfonamid ableitet;
wobei die kationische Basic-Yellow-Farbstoffkomponente aus der Gruppe der Kationen bestehend aus Basic Yellow 1, Basic Yellow 2, Basic Yellow 11, Basic Yellow 13, Basic Yellow 21, Basic Yellow 24, Basic Yellow 29, Basic Yellow 37, Basic Yellow 49, Basic Yellow 51, Basic Yellow 57 und Basic Yellow 90 ausgewählt ist.

2. Optisches Datenaufzeichnungsmedium mit einer optischen Schicht nach Anspruch 1, wobei die Farbstoffverbindung die Formel (II) aufweist und
M₂ unter Co oder Cr ausgewählt ist;
R₉ und R₁₁ für Wasserstoff stehen und
R₈ unter Wasserstoff, Nitro oder SO₂NR₂₁R₂₂ ausgewählt ist, wobei
R₂₁ für Wasserstoff steht und
R₂₂ für C₁₋₆-Alkyl steht;
R₁₀ unter Wasserstoff oder Nitro ausgewählt ist;
X für einen deprotonierten Rest steht, der sich von Hydroxyl ableitet; und
R₁₂ die Formel (a)-(d) aufweist, wobei * und ** die -C=C-Gruppe angeben, an die sie gebunden sind, 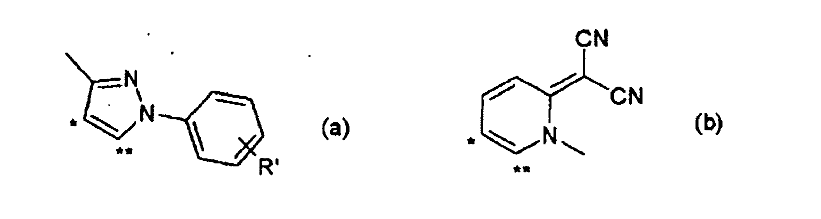 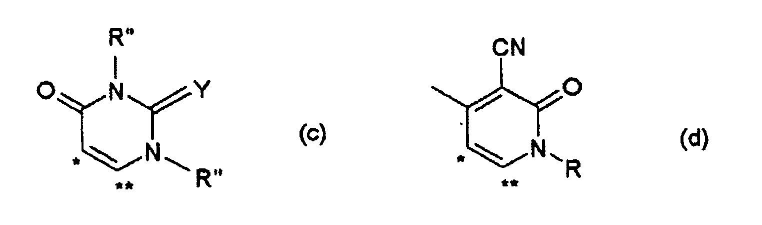 worin
R für C₁₋₄-Alkyl oder -NH-Phenyl und vorzugsweise für n-Butyl steht;
R' für H oder Cl und vorzugsweise für Cl in para-Stellung steht;
R" für C₁₋₄-Alkyl und vorzugsweise für Methyl oder Ethyl steht;
Y für O oder S steht.

3. Optisches Datenaufzeichnungsmedium mit einer optischen Schicht nach Anspruch 1 oder 2, wobei die Farbstoffverbindung die Formel (II) aufweist und die kationische Basic-Yellow-Farbstoffkomponente unter 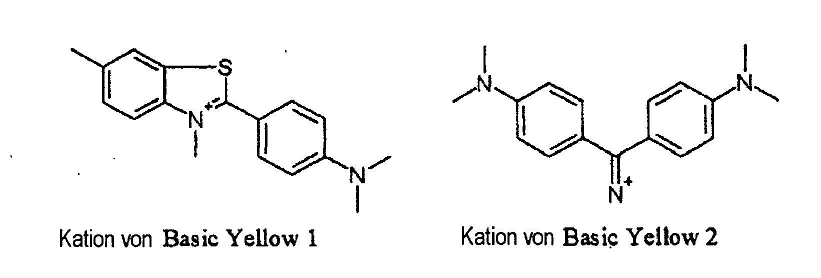 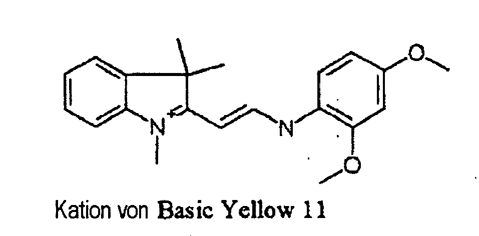 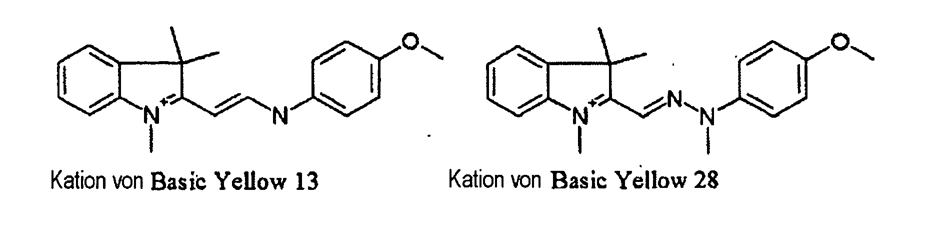 ausgewählt ist.

4. Optisches Datenaufzeichnungsmedium mit einer optischen Schicht nach einem oder mehreren der Ansprüche 1 bis 3, wobei das anionische Gegenion der Farbstoffverbindung der Formel (II) aus der Gruppe bestehend aus Verbindungen der Formel (A) bis (F) ausgewählt ist.

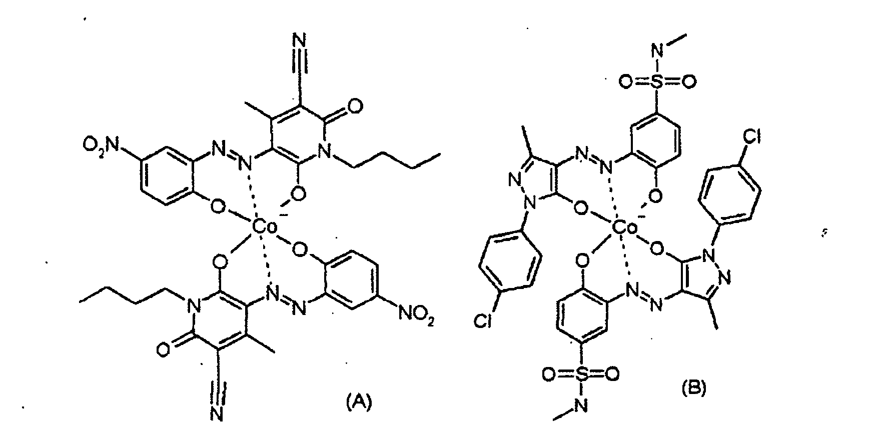

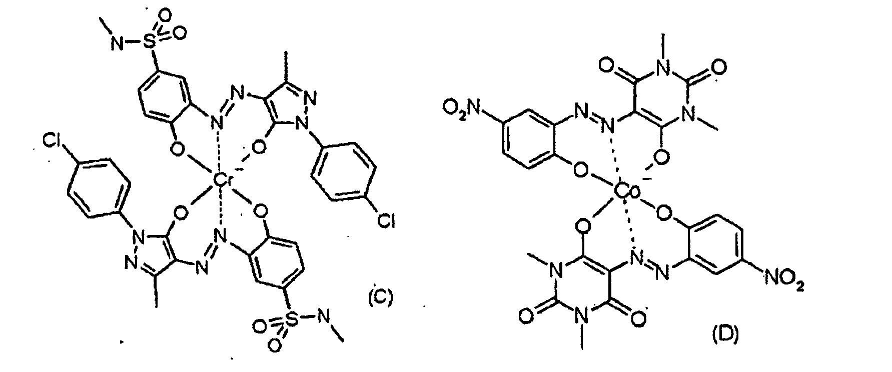

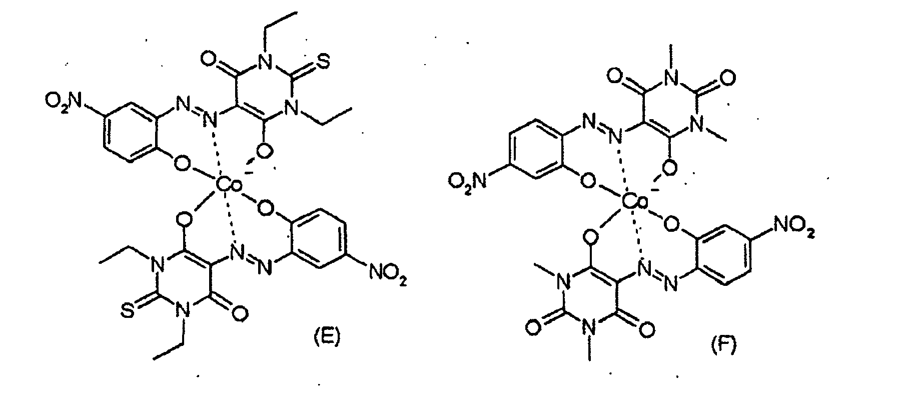

5. Optisches Datenaufzeichnungsmedium mit einer optischen Schicht nach Anspruch 1, wobei die optische Schicht eine Verbindung der Formel (I) oder (II) zusammen mit einem Aufzeichnungsfarbstoff der Formel (III) enthält 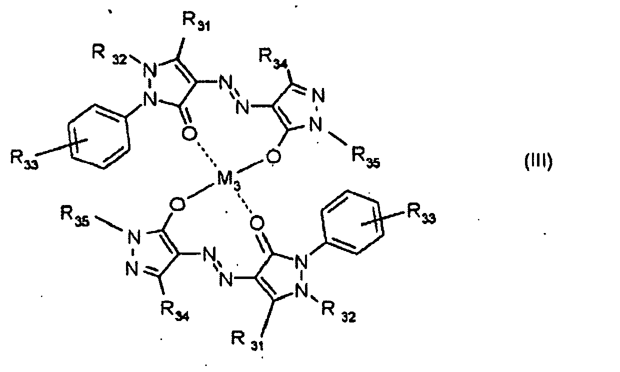 wobei
M₃ für ein Metallatom steht;
R₃₁ und R₃₄ unabhängig voneinander aus der Gruppe bestehend aus Wasserstoff, C₁₋₁₀-Alkyl, C₅₋₁₀-Cycloalkyl, wobei die Alkylgruppen gegebenenfalls durch Halogen substituiert sind; C₁₋₁₀-Alkoxy, unsubstituiertem Phenyl oder substituiertem Phenyl (wobei es sich bei den Substituenten um Halogen, C₁₋₁₀-Alkyl oder Nitro handelt), unsubstituiertem Benzyl oder substituiertem Benzyl (wobei es sich bei den Substituenten um Halogen, C₁₋₁₀-Alkyl oder Nitro handelt), Carboxy und C₁₋₁₀-Alkylcarboxylat ausgewählt sind;
R₃₂ unter C₁₋₁₀-Alkyl und C₅₋₁₀-Cycloalkyl, wobei die Alkylgruppen durch Halogen substituiert sind, ausgewählt ist;
R₃₃ unter Wasserstoff, -Cl, -CN, -Br, -CF₃, C₁₋₈-Alkyl, Chlormethyl, C₁₋₈-Alkoxymethyl oder Phenoxymethyl, NO₂ oder Sulfonamid ausgewählt ist;
R₃₅ unter Wasserstoff, C₁₋₁₀-Alkyl, C₅₋₁₀-Cycloalkyl, wobei die Alkylgruppen gegebenenfalls durch Halogen substituiert sind; C₁₋₁₀-Alkoxy, unsubstituiertem Phenyl oder substituiertem Phenyl (wobei es sich bei den Substituenten um Halogen, C₁₋₁₀-Alkyl oder Nitro handelt), unsubstituiertem Benzyl oder substituiertem Benzyl (wobei es sich bei den Substituenten um Halogen, C₁₋₁₀-Alkyl oder Nitro handelt), Carboxy oder C₁₋₁₀-Alkylcarboxylat ausgewählt ist.

6. Verfahren zur Herstellung eines optischen Datenaufzeichnungsmediums mit einer optischen Schicht nach einem oder mehreren der Ansprüche 1 bis 5, bei dem man
(a) ein Substrat bereitstellt,
(b) eine Farbstoffverbindung der Formel (I) oder (II) gemäß den Ansprüchen 1 bis 4 oder eine Mischung von Farbstoffverbindungen gemäß Anspruch 5 in einem organischen Lösungsmittel löst, wobei man eine Lösung erhält,
(c) die Lösung (b) auf das Substrat (a) aufträgt;
(d) das Lösungsmittel verdampft, wobei man einen Farbstoffilm erhält;
(e) auf die Farbstoffschicht eine Metallschicht aufsputtert;
(f) zur Vervollständigung der Scheibe eine zweite Schicht auf Polymerbasis aufbringt.

7. Verfahren nach Anspruch 6, bei dem man das Substrat unter Polycarbonat (PC) oder amorphen Polyolefinen auswählt.

8. Verfahren nach Anspruch 6 oder 7, bei dem man das organische Lösungsmittel unter C₁₋₈-Alkoholen, halogensubstituierten C₁₋₈-Alkoholen, C₁₋₈-Ketonen, C₁₋₈-Ethern, halogensubstituierten C₁₋₄-Alkanen oder Amiden auswählt.

9. Verfahren nach einem oder mehreren der Ansprüche 6 bis 8, bei dem die erhaltene optische Schicht eine Dicke von 70 bis 250 nm aufweist.

## Revendications

1. Support d'enregistrement optique de données comprenant une couche optique comprenant un composé colorant de formule (I) ou (II) 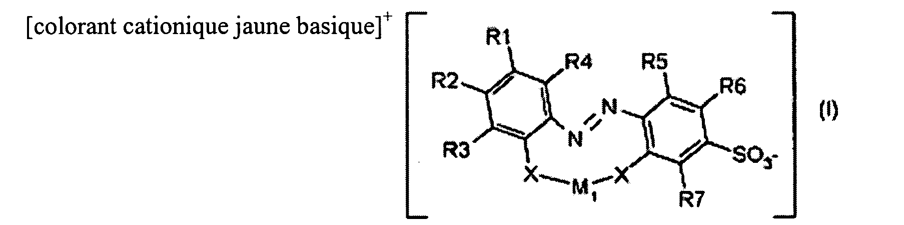 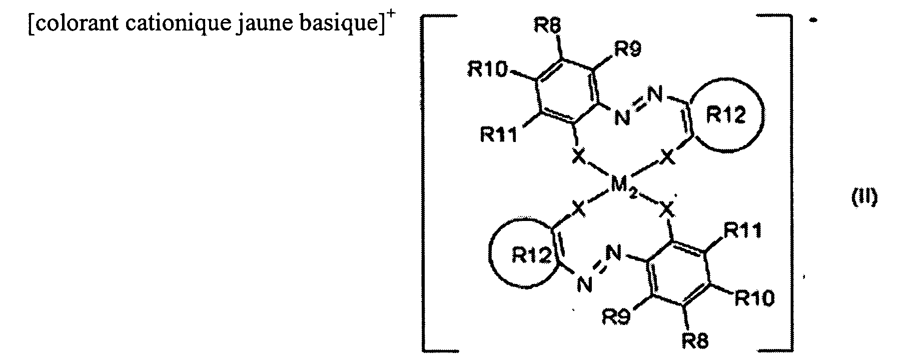 dans laquelle
M₁ est choisi parmi Ni, Cu, Zn et Mg ;
M₂ est choisi parmi Co, Cr, Fe et Al ;
R₁, R₂, R₃, R₄, R₅, R₆, R₇, R₈, R₉, R₁₀ et R₁₁, indépendamment les uns des autres, représentent un hydrogène, un groupe hydroxy, halogéno, cyano, nitro, alkyle, aryle, amino, alkylamino, dialkylamino, arylamino, diarylamino, dialkylamino-alkyle, hétéroaryle, alcoxy, alkylthio, aryloxy, arylthio, SO₃H, SO₂NR₂₁R₂₂, CO₂R₂₂, CONR₂₁R₂₂ ou NHCOR₂₂, où
R₂₁ est un hydrogène, un groupe alkyle en C₁₋₆, aryle en C₆₋₁₀ ou alcoxy en C₁₋₆, et
R₂₂ est un hydrogène, un groupe alkyle en C₁₋₆, aryle en C₆₋₁₀ ou alcoxy en C₁₋₆;
chaque R₁₂, indépendamment, conjointement avec le groupe -C=C- auquel il est attaché, forme un cycle aromatique non substitué ou substitué (les substituants étant un halogène, un groupe alkyle en C₁₋₁₀, un dicyanométhylène, un groupe cyano, un groupe carboxy, un carboxylate d'alkyle en C₁₋₁₀, un sulfonamide ou un groupe nitro), ou un hétérocycle non substitué ou substitué (les substituants étant un halogène, un groupe alkyle en C₁₋₁₀, un dicyanométhylène, un groupe cyano, un groupe carboxy, un carboxylate d'alkyle en C₁₋₁₀, un sulfonamide ou un groupe nitro) ;
X est un résidu déprotoné dérivé d'un groupe hydroxyle, amino, carbonamido ou sulfonamido ;
le composant colorant cationique jaune basique étant choisi dans le groupe de cations constitué par les cations de jaune basique 1, jaune basique 2, jaune basique 11, jaune basique 13, jaune basique 21, jaune basique 24, jaune basique 29, jaune basique 37, jaune basique 49, jaune basique 51, jaune basique 57 et jaune basique 90.

2. Support d'enregistrement optique de données comprenant une couche optique selon la revendication 1, dans lequel le composé colorant répond à la formule (II), et dans lequel
M₂ est choisi parmi Co et Cr ;
R₉ et R₁₁ représentent un hydrogène ;
R₈ est choisi parmi un hydrogène, un groupe nitro et SO₂NR₂₁R₂₂, où
R₂₁ est un hydrogène, et
R₂₂ est un groupe alkyle en C₁₋₆;
R₁₀ est choisi parmi un hydrogène et un groupe nitro ;
X est un résidu déprotoné dérivé d'un groupe hydroxyle ; et
les R₁₂ répondent aux formules (a)-(d), les * et ** indiquant le groupe -C=C- auquel ils sont attachés : 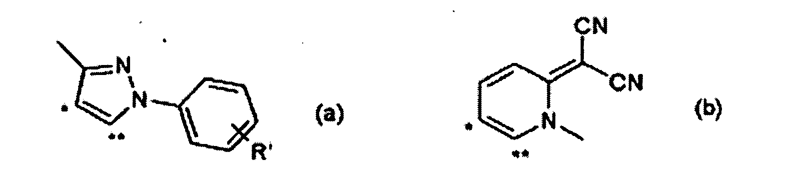 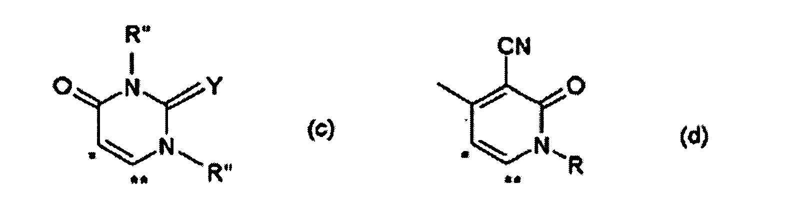 où
R est un groupe alkyle en C₁₋₄ ou -NH-phényle ; de préférence, R est un groupe n-butyle ;
R' est H ou Cl ; de préférence, R' est Cl en position para ;
R" est un groupe alkyle en C₁₋₄, de préférence méthyle ou éthyle ; et
Y est O ou S.

3. Support d'enregistrement optique de données comprenant une couche optique selon la revendication 1 ou 2, dans lequel le composé colorant répond à la formule (II), et dans lequel le composant colorant cationique jaune basique est choisi parmi

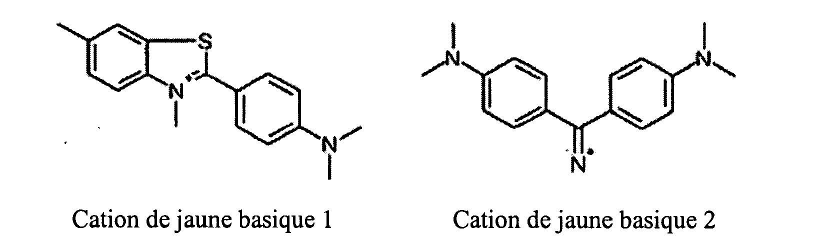

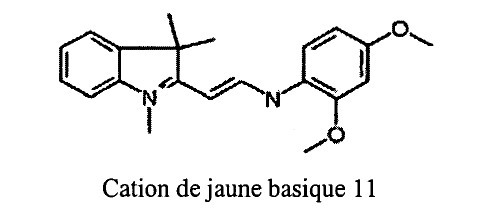

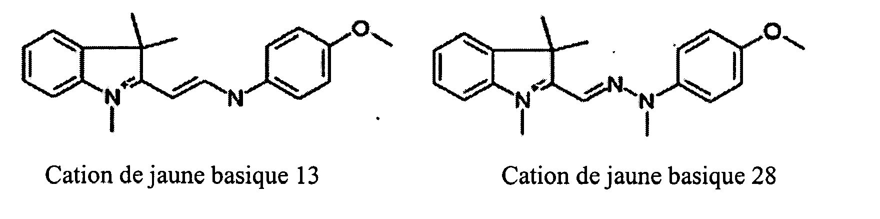

4. Support d'enregistrement optique de données comprenant une couche optique selon l'une ou plusieurs des revendications 1 à 3, dans lequel le contre-ion anionique du composé colorant de formule (II) est choisi dans le groupe constitué par les composés des formules (A) à (F)

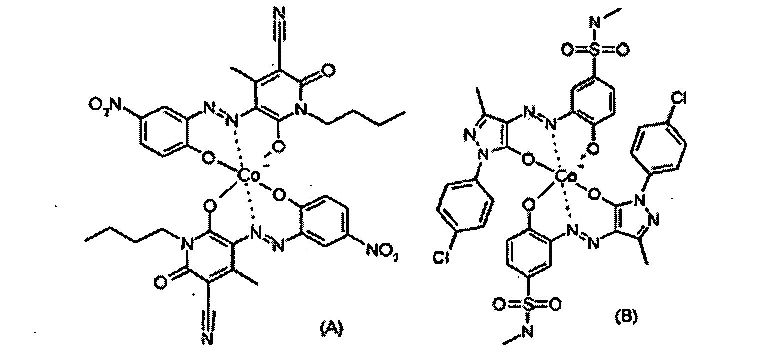

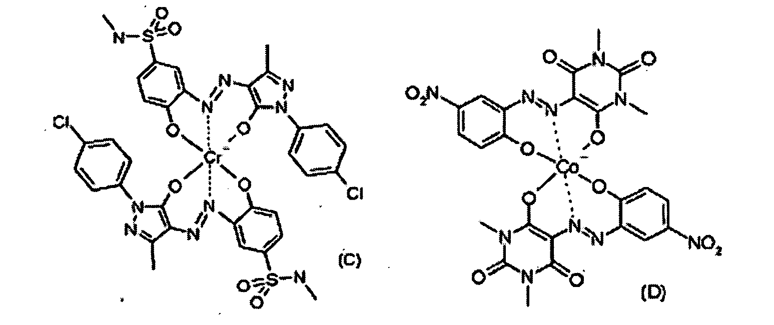

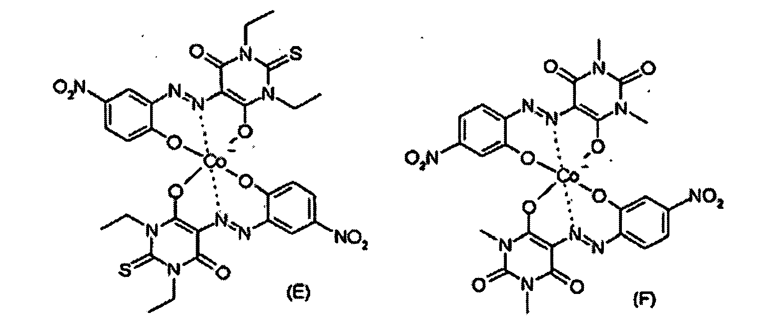

5. Support d'enregistrement optique de données comprenant une couche optique selon la revendication 1, dans lequel la couche optique comprend un composé de formule (I) ou (II) conjointement avec un colorant d'enregistrement de formule (III) 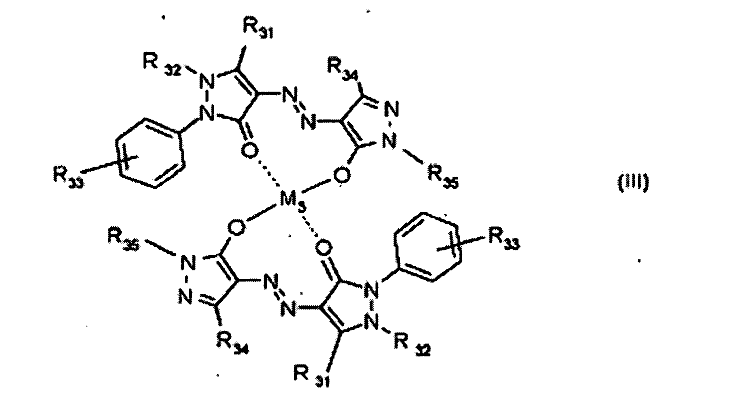 dans laquelle
M₃ représente un atome métallique ;
R₃₁ et R₃₄, indépendamment l'un de l'autre, sont choisis dans le groupe constitué par l'hydrogène, les groupes alkyle en C₁₋₁₀ et cycloalkyle en C₅₋₁₀, les groupes alkyle étant éventuellement substitués par un halogène, les groupes alcoxy en C₁₋₁₀, phényle non substitué ou phényle substitué (les substituants étant un halogène, un groupe alkyle en C₁₋₁₀ ou nitro), benzyle non substitué ou benzyle substitué (les substituants étant un halogène, un groupe alkyle en C₁₋₁₀ ou nitro), le groupe carboxy et les carboxylates d'alkyle en C₁₋₁₀ ;
R₃₂ est choisi parmi les groupes alkyle en C₁₋₁₀ et cycloalkyle en C₅₋₁₀, les groupes alkyle étant substitués par un halogène ;
R₃₃ est choisi parmi l'hydrogène, -Cl, -CN, -Br, -CF₃, les groupes alkyle en C₁₋₈, le chlorométhyle, les groupes (alcoxy en C₁₋₈)méthyle ou phénoxyméthyle, NO₂ et les sulfonamides ; et
R₃₅ est choisi parmi l'hydrogène, les groupes alkyle en C₁₋₁₀ et cycloalkyle en en C₅₋₁₀, les groupes alkyle étant éventuellement substitués par un halogène, les groupes alcoxy en C₁₋₁₀, phényle non substitué ou phényle substitué (les substituants étant un halogène, un groupe alkyle en C₁₋₁₀ ou nitro), benzyle non substitué ou benzyle substitué (les substituants étant un halogène, un groupe alkyle en C₁₋₁₀ ou nitro), le groupe carboxy et les carboxylates d'alkyle en C₁₋₁₀.

6. Procédé pour fabriquer un support d'enregistrement optique de données comprenant une couche optique selon l'une ou plusieurs des revendications 1 à 5, comprenant les étapes suivantes :
(a) obtenir un substrat ;
(b) dissoudre un composé colorant de formule (I) ou (II) tel que défini dans les revendications 1 à 4, ou un mélange de composés colorants tel que défini dans la revendication 5, dans un solvant organique pour former une solution ;
(c) déposer la solution (b) sur le substrat (a) ;
(d) évaporer le solvant pour former un film de colorant ;
(e) pulvériser une couche métallique sur la couche de colorant ; et
(f) appliquer une seconde couche à base de polymère pour compléter le disque.

7. Procédé selon la revendication 6, dans lequel le substrat est choisi parmi le polycarbonate (PC) et les polyoléfines amorphes.

8. Procédé selon la revendication 6 ou 7, dans lequel le solvant organique est choisi parmi les alcools en C₁₋₈, les alcools en C₁₋₈ substitués par un halogène, les cétones en C₁₋₈, les éthers en C₁₋₈, les alcanes en C₁₋₄ substitués par un halogène et les amides.

9. Procédé selon l'une ou plusieurs des revendications 6 à 8, dans lequel la couche optique obtenue a une épaisseur de 70 à 250 nm.
